(19) Europäisches Patentamt
European Patent Office
Office européen des brevets

(11) **EP 3 676 013 B1**

(12) **EUROPÄISCHE PATENTSCHRIFT**

(45) Veröffentlichungstag und Bekanntmachung des Hinweises auf die Patenterteilung:
**25.10.2023   Patentblatt 2023/43**

(21) Anmeldenummer: **18756413.3**

(22) Anmeldetag: **16.08.2018**

(51) Internationale Patentklassifikation (IPC):
**B04B 13/00** $^{(2006.01)}$     **B04B 15/00** $^{(2006.01)}$
**G01P 3/30** $^{(2006.01)}$     **G01P 3/42** $^{(2006.01)}$
**G01L 15/00** $^{(2006.01)}$     **G01L 5/00** $^{(2006.01)}$

(52) Gemeinsame Patentklassifikation (CPC):
**G01L 15/00; B04B 13/00; G01L 5/0061**

(86) Internationale Anmeldenummer:
**PCT/EP2018/072219**

(87) Internationale Veröffentlichungsnummer:
**WO 2019/042781 (07.03.2019 Gazette 2019/10)**

(54) **VORRICHTUNG UND VERFAHREN ZUM BESTIMMEN EINES IN EINEM ROTATIONSSYSTEM AUF EINEN STOFF WIRKENDEN PROZESSPARAMETERS**

DEVICE AND METHOD FOR DETERMINING A PROCESS PARAMETER ACTING ON A MATERIAL IN A ROTATIONAL SYSTEM

DISPOSITIF ET PROCÉDÉ POUR DÉTERMINER UN PARAMÈTRE DE PROCESSUS AGISSANT SUR UNE MATIÈRE DANS UN SYSTÈME DE ROTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.08.2017   DE 102017119741**

(43) Veröffentlichungstag der Anmeldung:
**08.07.2020   Patentblatt 2020/28**

(73) Patentinhaber: **Essentim GmbH**
**80331 München (DE)**

(72) Erfinder:
• **SCHUH, Matthias**
**80331 München (DE)**

• **PICHLER, Florian**
**80331 München (DE)**

(74) Vertreter: **DTS Patent- und Rechtsanwälte Schnekenbühl und Partner mbB**
**Brienner Straße 1**
**80333 München (DE)**

(56) Entgegenhaltungen:
WO-A1-2015/172255     DE-C- 459 226
GB-A- 130 367     GB-A- 1 028 257
GB-A- 2 341 811     GB-A- 2 363 745

**Beschreibung**

Die vorliegende Erfindung betrifft ein Messsystem zum Bestimmen eines Werts wenigstens eines auf einen in wenigstens einem Kompartiment eines Rotationssystems angeordneten Stoff wirkenden Prozessparameters, ein Rotationssystem und ein Verfahren zum Bestimmen eines auf einen in wenigstens einem Kompartiment eines Rotationssystems angeordneten Stoff wirkenden Prozessparameters.

Dynamische Systeme wie Rotationssysteme, bspw. Zentrifugen, bestehen in der Regel aus einem beweglichen Rotor und einer stationären Kammer, in der sich der Rotor um eine Rotationsachse dreht. Der Rotor kann mit Probegefäßen bestückt werden, so dass in den Probegefäßen angeordnete Proben durch die Drehung des Rotors beschleunigt werden und sich ggf. in ihre einzelnen Bestandteile aufspalten.

Üblicher Weise wird eine aktuelle Drehzahl einer Zentrifuge mittels eines mechanischen Zählwerks oder mittels eines Stroboskops ermittelt und die Zentrifuge entsprechend geregelt.

Ferner sind externe Systeme bekannt, mittels derer eine Funktion eines Rotationssystems qualifiziert, d. h. insbesondere überprüft werden kann. Derartige externe Systeme arbeiten in der Regel systemisch, so dass lediglich eine Funktion eines gesamten Rotationssystems, unabhängig von einem Zustand einer einzelnen Probe bzw. eines einzelnen Probegefäßes überprüft werden kann.

Die DE 195 00 133 A1 offenbart eine Zentrifuge mit einem Rotor, der mit einem Motor in Antriebsverbindung steht, wobei an dem Rotor berührungslos abtastbare Informationsträger angeordnet sind, die mit einem ortsfesten Sensor in Wirkverbindung stehen. Dabei stehen der Sensor und ein Drehzahlgeber über Leitungen mit einem der Auswertung entsprechend übertragener Signale dienenden Schaltkreis in Verbindung.

Die DE 44 20 562 C2 offenbart ein Drehzahlmeßgerät zur Messung von Drehzahlen an einer Vielzahl von Meßstellen mit einer integrierten Lichtstrahl Abtasteinrichtung zum Erfassen der Drehzahl an einer Meßstelle eines rotierenden Körpers mittels eines Lichtstrahles.

Die US 2010 00 09 833 A1 offenbart eine sich automatisch ausbalancierende Zentrifuge, die eine Stärke und einen Ort eines Ungleichgewichts der Zentrifuge basierend auf im Betrieb der Zentrifuge erzeugten Vibrationen berechnet. Die Zentrifuge ist dazu konfiguriert, sich automatisch in Abhängigkeit des berechneten Ungleichgewichts auszurichten.

Die US 644 52 86 B1 offenbart ein Verfahren und eine Vorrichtung zum Überwachen und Anzeigen einer Druckveränderung in einem Fahrzeugreifen mittels eines Drahts, der zusammen mit einem Reifenventil als Modul in dem Reifen angeordnet ist. Weiterhin umfasst die durch D4 offenbarte Vorrichtung eine Auswerteeinheit, die dazu konfiguriert ist, durch einen Vergleich von durch den Draht ermittelten Messwerten mit einen vorgegebenen Schwellenwert einen in dem Reifen anliegenden Druck zu bestimmen.

Die US 4,244,513 A offenbart eine Zentrifuge zum Trennen von Substanzen unterschiedlicher Dichte und ein Verfahren zum Steuern einer Geschwindigkeit eines Rotors der Zentrifuge mittels einer Entlüftungseinrichtung, die geregelt wird, um eine gewünschte Kraft einzustellen, die auf die Substanzen wirkt.

Ferner zeigt die WO 2015/172255 A1 Systeme, Verfahren und Vorrichtungen, die für die automatisierte Zentrifugalverarbeitung von Proben bereitgestellt sind. In einigen Ausführungsformen wird eine integrierte Fluidikverarbeitungskassette bereitgestellt, bei der eine Zentrifugationskammer über eine seitliche Oberfläche mit einer mikrofluidischen Vorrichtung fluidisch verbunden ist, und wobei die integrierte Fluidikverarbeitungskassette so konfiguriert ist, dass sie zur Zentrifugation in eine Zentrifuge eingesetzt werden kann.

Weiter zeigt die GB 2363745 A Flüssigproben, die Feststoffe enthalten und unter vermindertem Druck in einem Zentrifugalverdampfer verdampft und während des Verdampfungsprozesses erhitzt werden, um die latente Verdampfungswärme auszugleichen. Wichtig ist, dass möglichst alle Proben die gleiche Wärmezufuhr erhalten, damit sie mit der gleichen Geschwindigkeit verdampft werden. Um dies zu erreichen, werden die Proben, die in einer Vielzahl von Probenoder Mikrotiterplatten enthalten sind, auf wärmeleitenden Tabletts usw. gelagert, die wiederum in einem wärmeleitenden Rahmen gelagert sind.

Die GB 130367 A zeigt zudem, dass eine Druckdifferenz, die in einer in einem Gehäuse rotierenden Flüssigkeit entsteht, über ein Differenzdruckmessgerät übertragen wird. Die Bewegung der in einem hohlen Rotor enthaltenen Flüssigkeit wird durch Reibung zwischen der Oberfläche des Rotors und der Flüssigkeit erzeugt. In die Flüssigkeit eingetaucht ist ein Paar radial angeordneter Pitot-Rohre, deren Enden sich in der Nähe des Rotorumfangs befinden. Die Verbindungen zu den Rohren gehen durch eine feststehende Hohlwelle, auf der der Rotor mit Hilfe von Kugellagern gelagert ist; die Rohre verbinden die Vorrichtung mit einem Differenzdruckmesser. Der Rotor wird durch eine daran befestigte Riemenscheibe in Bewegung gesetzt.

Vor diesem Hintergrund ist es eine Aufgabe der vorgestellten Erfindung, ein Messsystem zum Ermitteln wenigstens eines Prozessparameters eines dynamischen Systems, insbesondere eines Rotationssystems, in vorteilhafter Weise weiterzubilden, insbesondere dahingehend, dass eine Möglichkeit zum kontinuierlichen Qualifizieren eines beim Betrieb eines Rotationssystems auf eine Probe wirkenden Prozessparameters bereitzustellen, vorzugsweise direkt am Point of Interest.

Diese Aufgabe wird erfindungsgemäß gelöst durch ein Messsystem mit den Merkmalen des Anspruchs 1. Danach ist vorgesehen, dass ein Messsystem zum ein Einsatz in einem dynamischen System vorgesehen ist, insbesondere in einem Rotationssystem, wobei das dynamische System ein oder mehrere Kompartimente aufweist, und wobei das Messsystem im Betrieb in das dynamische System eingesetzt oder einsetzbar ist und zum Bestimmen eines Werts wenigstens eines auf einen in wenigstens einem Kompartiment des dynamischen Systems angeordneten Stoff wirkenden Prozessparameters eingerichtet und bestimmt ist, wobei das Messsystem wenigstens einen zumindest teilweise in wenigstens einem Kompartiment des dynamischen Systems anordenbare Sensoreinheit und eine Auswerteeinheit umfasst, wobei die Auswerteeinheit dazu konfiguriert ist, anhand von durch die wenigstens eine Sensoreinheit ermittelten Messwerten einen aktuellen Wert wenigstens eines auf einen in dem Kompartiment angeordneten Stoff wirkenden Prozessparameters zu bestimmen, wobei die wenigstens eine Sensoreinheit wenigstens einen ersten Drucksensor und wenigstens einen zweiten Drucksensor umfasst, wobei das Messsystem mehrere Sensoreinheiten mit jeweils wenigstens einem ersten Drucksensor und jeweils wenigstens einem zweiten Drucksensor umfasst, wobei die Sensoreinheiten an und/oder in einer Vielzahl Kompartimente des dynamischen Systems anzuordnen sind, wobei in einem Betriebszustand, in dem sich Abstände zwischen jeweiligen an verschiedenen Kompartimenten anzuordnenden ersten Drucksensoren und zweiten Drucksensoren voneinander unterscheiden, die Auswerteeinheit dazu konfiguriert ist, diejenigen Drucksensoren zur Bestimmung eines aktuellen Werts des wenigstens einen Prozessparameters zu verwenden, die in einem Kompartiment angeordnet sind, das gemäß einer Zuordnungstabelle und/oder Zuordnungsdaten einem aktuellen Betriebszustand des dynamischen Systems zugeordnet ist.

Die Erfindung basiert auf dem Grundgedanken, eine Messung des Prozessparameters nicht mehr indirekt wie im Stand der Technik, sondern direkt am Point of Interest vorzunehmen. Es wird also eine Messung des Prozessparameters direkt an der Stelle vorgenommen, die die Stelle ist oder der Stelle entspricht, der auch der interessierende Stoff ausgesetzt ist. Mit anderen Worten wirken beispielsweise dieselben Einflüsse wie Druck, Beschleunigung, Geschwindigkeit und/oder sowohl auf den Stoff als auch auf das Messsystem und seine Sensoreinheit. Eine wesentlich direktere und genaue Überwachung online und auch in Realzeit (sog. Realtime Monitoring) ist dadurch möglich.

Mögliche Ausgestaltungen der Erfindung ergeben sich aus der Beschreibung und den abhängigen Ansprüchen.

Ein dynamisches System kann beispielsweise ein Rotationssystem sein, mittels dessen eine Rotationsbewegung sowohl des Stoffes als auch des Messsystems durchgeführt werden kann. Denkbar ist aber auch, dass es sich um z.B. ein Linearbeschleunigungssystem oder eine schiefe Ebene oder der gleichen handelt. Jedenfalls ist das dynamische System im Sinne der vorliegenden Erfindung derart eingerichtet und beschaffen, dass mit ihm eine Bewegung sowohl des Stoffes als auch des Messsystems durchgeführt werden kann.

Unter einem Kompartiment ist im Kontext der vorgestellten Erfindung ist insbesondere ein Raum, Abschnitt oder Bereich in einem dynamischens System wie eine Rotationssystem (z.B. einer Zentrifuge) zu verstehen, der bzw. das sich beim Betrieb des Systems bewegt und insbesondere bei einem Rotationssystem um eine Rotationsachse des Rotationssystems dreht. Insbesondere ist unter einem Kompartiment ein Probengefäß oder Probenhalter zu verstehen, das aus dem Rotationssystem entnommen und wieder eingesetzt werden kann.

Unter einem Sensor ist im Kontext der vorgestellten Erfindung jede Einheit zum Ermitteln eines Messwerts zu verstehen.

Der wenigstens eine Sensor des vorgestellten Messsystem kann in einer Kapsel an einem Kompartiment eines Rotationssystems, bspw. einem Probengefäß, angeordnet werden.

Ferner kann der wenigstens eine Sensor bspw. mittels eines Befestigungsmittels an einem vorgegebenen Ort an einem Kompartiment eines Rotationssystems, bspw. einem Probengefäß, angeordnet werden.

Alternativ kann der wenigstens eine Sensor zumindest teilweise in ein Kompartiment eines jeweiligen Rotationssystems integriert sein. Dazu kann der wenigstens eine Sensor bspw. in ein das Kompartiment bildendes Material eingearbeitet sein und insbesondere in eine durch das Kompartiment gebildete Kammer hineinragen.

Unter einem Prozessparameter ist im Kontext der vorgestellten Erfindung ein Parameter, wie bspw. eine Kraft, insbesondere eine Beschleunigung, wie bspw. eine Zentrifugalbeschleunigung bzw. eine Zentrifugalkraft, zu verstehen.

Ein Prozessparameter kann auch ein Betriebsparameter eines jeweiligen Rotationssystems, wie bspw. eine Drehzahl eines Rotors sein, mit der eine in einem Kompartiment angeordnete Probe gedreht wird.

Ferner kann ein Prozessparameter ein in einem Kompartiment anliegender Druck sein. Es kann sich aber auch um einen um das Kompartiment herum anliegenden Druck oder einen in einem dem Kompartiment benachbarten Bereich anliegenden Druck handeln.

Das vorgestellte Messsystem dient insbesondere zum Bestimmen eines auf einen in ein Rotationssystem eingebrachten Stoff, wie bspw. eine Probe oder eine Referenzsubstanz wirkenden Prozessparameters.

Der Sensor des vorgestellten Messsystems kann sowohl zum aktiven Bestimmen als auch zum passiven Bestimmen mindestens eines Werts mindestens eines Prozessparameters eines Rotationssystems verwendet werden.

Unter aktivem Bestimmen ist im Kontext der vorgestellten Erfindung ein Vorgang zu verstehen, bei dem von dem Sensor ermittelte Werte mittels einer physisch mit dem Sensor verbundenen Auswerteeinheit ausgewertet werden, um einen Wert eines jeweiligen Prozessparameters zu bestimmen.

Unter passivem Bestimmen ist im Kontext der vorgestellten Erfindung ein Vorgang zu verstehen, bei dem von dem Sensor ermittelte Werte bspw. über eine Drahtlosschnittstelle an eine Auswerteeinheit übertragen werden, um mittels einer externen Auswerteeinheit einen Wert eines jeweiligen Prozessparameters zu bestimmen.

Sowohl zum aktiven Bestimmen von Werten eines Prozessparameters durch einen Prozessor als auch zum Übertragen und/oder Speichern von Informationen kann das vorgestellte Messsystem eine Energiequelle, wie bspw. eine Batterie umfassen.

Alternativ kann das vorgestellte Messsystem ein System zur kabellosen Energieübertragung bzw. zum Empfang von Energie, wie bzw. eine induktive Lade- bzw. Versorgungseinheit umfassen.

Insbesondere ist vorgesehen, dass der Sensor an sich oder in Kombination mit weiteren Komponenten, wie bspw. einer Energiequelle und/oder einer Recheneinheit eine Messeinheit bildet, die in ein jeweiliges Rotationssystem einzubringen ist.

Die Messeinheit kann von einer Schutzhülle umgeben sein und bspw. als Kapsel ausgestaltet sein.

Das vorgestellte Messsystem basiert insbesondere auf der Verwendung wenigstens eines zumindest teilweise in einem Kompartiment eines Rotationssystems, wie bspw. einer Zentrifuge angeordneten bzw. anordenbaren Sensors.

Insbesondere ermöglicht das vorgestellte Messsystem eine Bestimmung von auf einen jeweiligen in einem jeweiligen Probengefäß angeordneten Stoff bzw. Stoffgemisch wirkenden Kräften bzw. Bedingungen direkt an einem Ort, an dem der Stoff bzw. das Stoffgemisch in einem Rotationssystem angeordnet ist (Point of interest Messung). Entsprechend können die auf den Stoff wirkenden Kräfte bzw. Bedingungen unabhängig von aktuellen Gesamtbedingungen des gesamten Rotationssystems erfasst, protokolliert und ggf. verändert werden.

Der wenigstens eine zumindest teilweise in einem jeweiligen Kompartiment angeordnete Sensor hat die Wirkung, eine rotationsbedingte Veränderung eines auf einen in dem Kompartiment angeordneten Stoff, wie bspw. eine Probe wirkenden Prozessparameter direkt in dem Kompartiment zu erfassen.

Das vorgestellte Messsystem ermöglicht eine Situationsanalyse eines Istzustands einer in einem Rotationssystem beschleunigten Probe. Durch eine Übertragung von durch den wenigstens einen Sensor ermittelten Daten zu einer Auswerteeinheit kann während eines Betriebs des Rotationssystems wenigstens ein auf die Probe wirkender Prozessparameter, wie bspw. eine Beschleunigung, erfasst und ausgewertet werden.

Mittels einer Situationsanalyse eines Istzustands einer in einem Rotationssystem beschleunigten Probe können bspw. Unregelmäßigkeiten im Betrieb des Rotationssystems erkannt werden. Bspw. kann ein verkanteter Hebemechanismus, der dazu führt, dass ein Kompartiment nicht vollständig horizontal ausgerichtet wird, während eines Betriebs des Rotationssystems erkannt werden.

Insbesondere ist vorgesehen, dass das vorgestellte Messsystem in einer Hüllstruktur, wie bspw. einer Kapsel angeordnet wird und bspw. in einem Probengefäß eines Rotationssystems angeordnet wird.

Der wenigstens eine Sensor des vorgestellten Messsystems kann als Messeinheit mit bspw. einem Speicher und/oder einer Steuerungseinheit und/oder einer Kommunikationseinheit, wie bspw. einem Bluetoothmodul, ausgestaltet sein.

Der wenigestens eine Sensor des vorgestellten Messsystems kann lösbar bzw. wiederverwendbar mit einem Rotationssystem, insbesondere einem Probengefäß einer Zentrifuge verbunden werden.

Das vorgestellte Messsystem kann dazu verwendet werden, ein bestehendes Rotationssystem nachzurüsten bzw. ein bestehendes Rotationssystem durch den wenigstens einen Sensor des vorgestellten Messsystems zu ergänzen.

Selbstverständlich kann der wenigstens eine Sensor auch fest mit einem jeweiligen Rotationssystem verbunden sein.

Das vorgestellte Messsystem kann zusätzlich oder unabhängig von einer an einem Rotationssystem bereits vorhandenen Sensorik verwendet werden, um wenigstens einen Prozessparameter des Rotationssystems zu qualifizieren und/oder zu quantifizieren. Dies bedeutet, dass durch den wenigstens einen Sensor ermittelte Werte bspw. unter Verwendung von außerhalb eines jeweiligen Kompartiments angeordneten Sensoren ermittelten Werten ausgewertet werden, um einen Wert eines jeweiligen Prozessparameters zu bestimmen.

Die wenigstens eine Sensoreinheit umfasst einen ersten Drucksensor und wenigstens einen zweiten Drucksensor. Mittels mehrerer Drucksensoren können Werte von Drücken an verschiedenen Positionen innerhalb eines Rotationssystems erfasst werden. Entsprechend kann aufgrund von an verschiedenen Positionen erfassten Drücken auf eine Druckverteilung bzw. einen Druckgradienten in dem Rotationssystem geschlossen werden.

In einer weiteren möglichen Ausgestaltung des vorgestellten Messsystems ist vorgesehen, dass der erste Drucksensor und der wenigstens eine zweite Drucksensor ein Differentialdrucksystem bilden.

Ein Differenzialdrucksystem aus wenigstens einem ersten Drucksensor und wenigstens einem zweiten Drucksensor hat die Wirkung, dass eine Veränderung von Druckverhältnissen in einem jeweiligen Kompartiment erfasst werden kann. Entsprechend ermöglicht das Differenzialdrucksystem einen Rückschluss von durch das Differenzialdrucksystem ermittelten Messwerten auf einen Zustand von in dem Kompartiment vorhandenen Stoffen, wie bspw. einer Probe oder einer Referenzsubstanz.

Da in einem zentrifugierten bzw. rotierten Volumen mit zunehmender Zentrifugalkraft bzw. zunehmender Rotationsgeschwindigkeit ein Druckgradient entsteht, kann dieser Druckgradient mittels mehrerer Drucksensoren bzw. einem Differenzialdrucksystem erfasst werden. Anhand eines derart ermittelten Druckgradients bzw. Differenzdruckwerts kann auf aktuell in einem jeweiligen Kompartiment wirkende Prozessparameter, wie bspw. eine aktuelle Zentrifugalbeschleunigung, geschlossen werden.

In einer weiteren möglichen Ausgestaltung des vorgestellten Messsystems ist vorgesehen, dass der erste Drucksensor an einem ersten Ort in dem wenigstens einen Kompartiment und der wenigstens eine zweite Drucksensor an wenigstens einem zweiten Ort in dem wenigstens einen Kompartiment angeordnet ist, wobei sich eine Distanz zwischen einem Rotationszentrum des Rotationssystems und dem ersten Ort von einer Distanz zwischen dem Rotationszentrum und dem wenigstens einen zweiten Ort unterscheidet.

Mittels verschiedener Drucksensoren kann eine Veränderung eines auf einen in einem Kompartiment angeordneten Stoff wirkenden Prozessparameters über eine sich zwischen den Drucksensoren aufspannende Strecke überwacht werden. Entsprechend können Druckunterschiede bspw. zwischen einem Bereich, der nahe einem Rotationszentrum liegt und einem Bereich, der weiter entfernt von dem Rotationszentrum liegt, erfasst werden, wodurch auf einen Druckverlauf in dem Kompartiment geschlossen werden kann.

Des Weiteren umfasst das Messsystem mehrere Sensoreinheiten mit jeweils wenigstens einem ersten Drucksensor und jeweils wenigstens einem zweiten Drucksensor, wobei die Sensoreinheiten an und/oder in einer Vielzahl Kompartimente des dynamischen Systems anzuordnen sind.

Insbesondere ist vorgesehen, dass die ersten Drucksensoren und die zweiten Drucksensoren jeweils paarweise an einem Kompartiment angeordnet sind.

Unter Verwendung einer Vielzahl erster und zweiter Drucksensoren an einer Vielzahl Kompartimente können die jeweiligen Kompartimente der Vielzahl Kompartimente individuell überwacht werden.

Weiterhin ermöglicht eine Verwendung von an einer Vielzahl Kompartimente angeordneten Sensoren eine Auswertung eines Zustands eines Gesamtsystems, d. h. eines Zustands eines jeweiligen Rotationssystems. Dies bedeutet, dass bspw. durch einen Abgleich von durch an verschiedenen Kompartimenten angeordneten Sensoren ermittelten Werten untereinander eine Laufruhe des Rotationssystems quantifiziert und qualifiziert werden kann.

Darüber hinaus ist denkbar, dass die jeweiligen an und/oder in einem jeweiligen Kompartiment angeordneten Drucksensoren beweglich angeordnet sind oder angeordnet werden können. So kann sich bei steigender Drehzahl eines Rotors des Rotationssystems eine Distanz zwischen den an und/oder in dem jeweiligen Kompartiment angeordneten Drucksensoren verringert und bei sinkender Drehzahl entsprechend wieder vergrößern.

Beweglich angeordnete Drucksensoren haben die Wirkung, dass ein Abstand zwischen jeweiligen Drucksensoren in Abhängigkeit bspw. einer aktuell auf die Drucksensoren wirkenden Beschleunigung verändert werden kann. So kann sich der Abstand bspw. bei steigender Beschleunigung verringert und bei sinkender Beschleunigung entsprechend vergrößern. Über den Abstand der Drucksensoren kann z.B. ein Messfehler aufgrund des zunehmenden Abstands geringer ausfallen, da der messbare Druckunterschied steigt. Eine Verringerung des Abstandes kann aber insbesondere dann von Vorteil sein, wenn der zu messende Druck an zumindest einem Sensor sich im Bereich des Randes des Messbereichs dieses Sensors bewegt. Durch die Positionsveränderung kann dann ein anderer Bereich (bewusst) anwählbar sein bzw. durch automatische oder manuelle Umpositionierung einstellbar sein, um hier in anderen Druckbereichen zu messen.

In einer Ausgestaltung des vorgestellten Messsystems ist vorgesehen, dass in einem Betriebszustand, in dem sich Abstände zwischen jeweiligen an verschiedenen Kompartimenten anzuordnenden ersten Drucksensoren und zweiten Drucksensoren voneinander unterscheiden, die Auswerteeinheit dazu konfiguriert ist, diejenigen Drucksensoren zur Bestimmung eines aktuellen Werts des wenigstens einen Prozessparameters zu verwenden, die in einem Kompartiment angeordnet sind, das gemäß einer Zuordnungstabelle und/oder Zuordnungsdaten (z.B. digitale Zuordnungsdaten) einem aktuellen Betriebszustand des Rotationssystems zugeordnet ist.

Mittels einer Vielzahl von mit Sensoren ausgestatteten Kompartimenten können verschiedene Sensorkonfigurationen an verschiedenen Kompartimenten umgesetzt werden.

Insbesondere können Sensorpaare in verschiedenen Abständen zueinander an verschiedenen Kompartimenten vorgesehen sein.

Da verschiedene Abstände zwischen jeweiligen Sensoren verschiedene Messgenauigkeiten bedingen, können jeweilige für jeweilige Betriebsbedingungen eines jeweiligen Rotationssystems besonders vorteilhaft geeignete Abstände als aktuelle Datenquelle zum Bestimmen des Werts des wenigstens einen Prozessparameters gewählt werden.

Da ein Messfehler bei einem großen Abstand zwischen jeweiligen Sensoren in der Regel größer ist als bei einem kleinen Abstand, und ein Druckgradient mit zunehmender Drehzahl über eine kleiner werdende Strecke hinweg erfassbar wird, kann es vorgesehen sein, dass bei niedrigen Drehzahlen Messwerte von einem Kompartiment mit in großem Abstand zueinander angeordneten Sensoren ermittelt werden, wohingegen bei steigenden Drehzahlen schrittweise Messwerte von Kompartimenten mit in kleiner werdenden Abständen angeordneten Sensoren ermittelt werden.

Die Auswahl eines jeweiligen Kompartiments bzw. jeweiliger an einem jeweiligen Kompartiment angeordneter Sensoren kann mittels einer Zuordnungstabelle bzw. eines Zuordnungsschemas erfolgen, die verschiedenen Drehzahlbereichen verschiedene Kompartimente mit entsprechenden Sensorabständen zuordnet.

Insbesondere kann die Zuordnungstabelle Informationen darüber umfassen, welche Kompartimente bzw. welche Drucksensoren bei welchen Messwerten zum Bestimmen eines aktuellen Werts des wenigstens einen Prozessparameters, wie bspw. der aktuellen Drehzahl des Rotors des Rotationssystems, zu verwenden sind.

Außerdem kann vorgesehen sein, dass das Messsystem wenigstens einen Lagesensor zum Ermitteln einer Neigung wenigstens eines Kompartiments umfasst.

Mittels eines Lagesensors kann eine sich bspw. in Abhängigkeit einer auf ein Kompartiment wirkenden Beschleunigung verändernde Lage eines Kompartiments erfasst werden. Entsprechend kann, wenn die Veränderung der Lage des Kompartiments bekannt ist, ein Messwert eines jeweiligen in dem Kompartiment angeordneten Sensors um die veränderte Lage korrigiert werden, so dass in einer ersten Lage ermittelte Messwerte mit in einer zweiten Lage ermittelten Messwerten vergleichbar sind bzw. vergleichbar werden.

Des Weiteren ist denkbar, dass die Auswerteeinheit dazu konfiguriert ist, im Betrieb von wenigstens einem in einem jeweiligen Kompartiment angeordneten Sensor zur Bestimmung des wenigstens einen Prozessparameters ermittelte Messwerte unter Verwendung der mittels des Lagesensors ermittelten Neigung des wenigstens einen Kompartiments zu korrigieren.

Da sich eine auf einen in einem Kompartiment eines Rotationssystems angeordneten Stoff wirkende Kraft bei einer veränderten Lage des Kompartiments ändert, kann eine Einbeziehung einer aktuell ermittelten Lage des Kompartiments zu einer hohen Genauigkeit einer Berechnung eines auf den Stoff wirkenden Prozessparameters beitragen.

Es ist möglich, dass die Auswerteeinheit dazu konfiguriert ist, im Betrieb anhand eines Abgleichs von aktuell durch den wenigstens einen Lagesensor ermittelten Messwerten mit wenigstens einem Referenzwert eine Lage eines jeweiligen Kompartiments und/oder des Rotationssystems zu überprüfen und, für den Fall, dass eine Abweichung zwischen den aktuell durch den wenigstens einen Lagesensors ermittelten Messwerten und dem wenigstens einen Referenzwert größer ist als ein vorgegebener Schwellenwert, mittels einer Ausgabeeinheit eine Warnung auszugeben.

Eine zur Ausgabe einer Warnung konfigurierte Auswerteeinheit hat den Effekt, dass eins jeweiliges Rotationssystem für eine valide bzw. vergleichbare Messung konfiguriert werden kann. Entsprechend kann die Warnung Informationen darüber umfassen, wie das Rotationssystem zu verschieben bzw. auszurichten ist, um die Abweichung zwischen durch einen Lagesensor aktuell ermittelten Messwerten und wenigstens einem Referenzwert zu minimieren.

Zum Überprüfen einer Ausrichtung eines Rotationssystems können insbesondere mehrere an mehreren Kompartimenten des Rotationssystems angeordnete Sensoren verwendet werden.

Selbstverständlich kann zum Überprüfen einer Ausrichtung eines jeweiligen Kompartiments auch lediglich jeweilige an dem Kompartiment angeordnete Sensoren verwendet werden. Dazu können bspw. Referenzwerte für verschiedene Betriebszustände eines jeweiligen Rotationssystems vorgegeben sein, so dass bei einer Abweichung zwischen einem aktuell ermittelten Messwert und einem jeweiligen Referenzwert auf eine fehlerhafte Ausrichtung des Kompartiments durch bspw. eine verklemmte Mechanik geschlossen werden kann.

In einer weiteren möglichen Ausgestaltung des vorgestellten Messsystems ist vorgesehen, dass das Messsystem wenigstens einen außerhalb eines jeweiligen Kompartiments angeordneten externen Sensor zum Erfassen wenigstens eines Betriebsparameters des Rotationssystems umfasst. Dabei ist die Auswerteeinheit dazu konfiguriert, jeweilige von dem wenigstens einen zumindest teilweise in dem Kompartiment angeordneten Sensor ermittelte Messwerte unter Verwendung von durch den externen Sensor ermittelten Messwerten zu korrigieren.

Ein externer, d. h. ein außerhalb eines Kompartiments angeordneter Sensor, wie bspw. ein optischer Sensor, ein magnetischer Sensor oder ein mechanischer Sensor, kann zum Erfassen eines aktuellen Prozessparameters eines jeweiligen Rotationssystems, wie bspw. einer Drehzahl eines Rotors des Rotationssystems verwendet werden. Anhand eines aktuellen Werts des Betriebsparameters können weitere Werte, wie bspw. mittels eines in dem Kompartiment angeordneten Sensors ermittelte Werte, korrigiert bzw. angepasst werden.

In einer weiteren möglichen Ausgestaltung des vorgestellten Messsystems ist vorgesehen, dass das Messsystem wenigstens einen Temperatursensor umfasst. Dabei ist vorgesehen, dass die Auswerteeinheit dazu konfiguriert ist, jeweilige mittels des wenigstens einen zumindest teilweise in dem wenigstens einen Kompartiment angeordneten Sensors ermittelte Messwerte unter Verwendung von durch den wenigstens einen Temperatursensor ermittelten Werten zu korrigieren.

Da sich eine aktuelle Temperatur insbesondere auf einen aktuell bspw. in einem jeweiligen Kompartiment anliegenden Druck auswirkt, kann die aktuelle Temperatur bspw. dazu verwendet werden, einen aktuell ermittelten Druck zu korrigieren bzw. zu prüfen.

Insbesondere kann es vorgesehen sein, dass der Temperatursensor zusammen mit einem oder mehreren Drucksensoren ein Sensorsystem bildet, dass als Teil des vorgestellten Messsystems zur Datenerfassung verwendet wird.

In einer weiteren möglichen Ausgestaltung des vorgestellten Messsystems ist vorgesehen, dass der wenigstens eine Sensor von einer Hüllstruktur umgeben ist.

Der wenigstens eine Sensor kann von einer Hüllstruktur, wie bspw. einer Kapsel umgeben sein und eine Messeinheit ausbilden, die in ein Kompartiment eines jeweiligen Rotationssystems einzubringen bzw. einbringbar ist.

Es kann vorgesehen sein, dass der wenigstens eine Sensor zusammen mit weiteren Komponenten, wie bspw. einem Speicher und/oder einer Steuerungseinheit und/oder einer Kommunikationseinheit in einer Hüllstruktur angeordnet ist und zusammen mit den weiteren Komponenten eine Messeinheit bildet, die in ein Kompartiment eines Rotationssystems gegeben werden kann.

In einer weiteren möglichen Ausgestaltung des vorgestellten Messsystems ist vorgesehen, dass die Hüllstruktur wenigstens eine Referenzsubstanz enthält bzw. einschließt.

Die Referenzsubstanz kann austauschbar sein.

Eine Referenzsubstanz, deren Zusammensetzung bzw. deren physikalische Eigenschaften bekannt sind, ermöglicht es, einen aktuell ermittelten Prozessparameter eines Rotationssystems objektiv bzw. unabhängig von jeweiligen physikalischen Eigenschaften einer Probe zu beurteilen. Bspw. kann für eine Referenzsubstanz eine Zuordnungstabelle oder geeignete Zuordnungsdaten (wie eine Zuordnungssoftware) erstellt werden, die jeweilige von einem Sensor ermittelte Messwerte jeweiligen Werten von Prozessparametern eindeutig zuordnet. Entsprechend werden durch eine Referenzsubstanz probenbedingte Messungenauigkeiten vermieden.

Insbesondere kann die Referenzsubstanz ausgewählt sein aus der folgenden Liste an Referenzsubstanzen: Gas, Gasgemisch, Flüssigkeitsgemisch, Flüssigkeit, Glycerin.

In einer weiteren möglichen Ausgestaltung des vorgestellten Messsystems ist vorgesehen, dass das Messsystem ein Kommunikationsmodul mit einer Kommunikationsschnittstelle afuweist und dazu konfiguriert ist, von dem wenigstens einen Sensor erfasste Messwerte und/oder aktuell ermittelte Werte des wenigstens einen Prozessparameters an die Auswerteeinheit zu übertragen.

Eine Kommunikationsschnittstelle ermöglicht es, ermittelte Daten, wie bspw. Messwerte, zu einer Auswerteeinheit zu übertragen und dort zu verarbeiten und/oder zu speichern.

In einer weiteren möglichen Ausgestaltung des vorgestellten Messsystems ist vorgesehen, dass das Messsystem einen Speicher und eine Steuerungseinheit umfasst. Dabei ist die Steuerungseinheit dazu konfiguriert, zumindest einen Teil der durch den wenigstens einen Sensor erfassten Werte in dem Speicher für eine Übertragung zu der Auswerteeinheit zwischenzuspeichern.

Mittels eines Zwischenspeichers, der bspw. als Überlaufspeicher ausgestaltet sein kann, können aktuell ermittelte Messwerte zwischengespeichert und ein Datenverlust aufgrund von bspw. Problemen bei einer drahtlosen Übertragung entsprechender Daten an eine Auswerteeinheit, vermieden werden.

Alternativ kann auch eine zum Zwischenspeichern von erfassten Messwerten bzw. ermittelten Werten von Prozessparametern konfigurierte Steuerungseinheit verwendet werden, um aktuelle Messdaten zwischenzuspeichern und, dadurch bedingt, einen Datenverlust aufgrund von bspw. Problemen bei einer drahtlosen Übertragung zu vermeiden.

Ein Zwischenspeicher kann bspw. nach einem Rotationsvorgang ausgelesen werden, so dass während des Rotationsvorgangs in den Zwischenspeicher geschriebene Daten sukzessive ausgelesen archiviert und/oder weiterverarbeitet werden können.

In einer weiteren möglichen Ausgestaltung des vorgestellten Messsystems ist vorgesehen, dass die wenigstens eine Sensoreinheit wenigstens einen Dehnungs messstreifen aufweist, der in Abhängigkeit einer auf den Dehnungsmessstreifen wirkenden Beschleunigung verformbar ist. Dabei kann die Auswerteeinheit dazu konfiguriert sein, anhand von durch wenigstens einen Dehnungsmessstreifen erfassten Messwerten der aktuellen Verformung den aktuellen Wert des wenigstens einen Betriebsparameters zu bestimmen.

Unter einer Verformung eines Dehnungsmessstreifens ist im Kontext der vorgestellten Erfindung insbesondere eine Krümmung und/oder eine Dehnung zu verstehen.

Ein Dehnungsmessstreifen hat den technischen Effekt, eine Verformung eines Kompartiments zu erfassen und, dadurch bedingt, eine auf das Kompartiment wirkende Kraft, insbesondere eine Zentrifugalkraft, zu bestimmen. Ein Dehnungsmessstreifen kann einfach auf ein Kompartiment, wie bspw. ein Probenröhrchen aufgebracht werden und eine farbliche und/oder elektrische und/oder magnetische Kodierung umfassen, die sich in Abhängigkeit einer auf den Dehnungsmessstreifen wirkenden Kraft verändert und bspw. mittels eines Sensors erfasst werden kann.

Bei dem Dehnungsmessstreifen kann es sich um einen Dehungsmessstreifen handeln, der in Abhängigkeit von dem Grad an Verformung seinen Widerstand ändert. Denkbar ist aber auch, dass es sich um einen Piezo-Dehnmesstreifen handelt, so dass durch den Piezo-Effekt entsprechend auf die Verformung des Piezo-Dehnmessstreifens und dadurch den Prozessparameter geschlossen werden kann.

Ferner kann ein Dehnungsmessstreifen durch eine Vielzahl von Messpunkten bzw. Sensoren einen Druckverlauf über eine vorgegebene Strecke hinweg sehr genau abbilden.

Ferner betrifft die vorgestellte Erfindung ein dynamisches System, insbesondere ein Rotationssystem mit einem Messsystem wie vorstehend beschrieben.

Das dynamische System kann insbesondere eine Zentrifuge sein.

Das vorgestellte Messsystem dient insbesondere zum Betrieb des dynamischen Systems.

In einer möglichen Ausgestaltung des dynamischen Systems kann vorgesehen sein, dass das dynamische System eine Steuerungseinheit umfasst. Es ist vorgesehen, dass die Steuerungseinheit dazu konfiguriert ist, einen Antrieb zum Bewegen eines Rotors des Rotationssystems in Abhängigkeit eines mittels des Messsystems ermittelten aktuellen Werts wenigstens eines auf einen in wenigstens einem Kompartiment des Rotationssystems angeordneten Stoff wirkenden Prozessparameters zu steuern.

Mittels einer Steuerungseinheit kann ein Antrieb eines dynamischen Systems, insbesondere eines Rotationssystems bspw. derart gesteuert werden, dass eine Probe in einem Kompartiment lediglich einem Prozessparameter, wie bspw. einer Beschleunigung bzw. einer Kraft ausgesetzt wird, die unterhalb eines vorgegebenen Schwellenwerts liegt.

Selbstverständlich kann mittels einer derartigen Steuereinheit ein Antrieb eines dynamischen Systems, insbesondere Rotationssystems, auch derart gesteuert werden, dass sich Eigenschaften eines jeweiligen Stoffs nicht über einen vorgegebenen Schwellenwert hinweg ändern.

Es kann bspw. vorgesehen sein, dass ein Antrieb eines Rotationssystems derart geregelt wird, dass sich ein jeweiliger Stoff nicht über einen vorgegebenen Temperaturpunkt hinaus erwärmt, so dass eine Antriebskraft reduziert wird, wenn sich eine aktuelle Temperatur des Stoffs dem vorgegebenen Temperaturpunkt bis auf einen Schwellenwert von bspw. 5 °C nähert (oder auch anderen Termperaturwerden z.B. der Wert "Umgebungstemperatur", Temperaturbereiche, Zielwerte im Bereich zwischen -50°C bis 100°C usw.), wobei selbstverständlich auch jeder weitere Schwellenwert angegeben werden kann.

Ferner betrifft die vorgestellte Erfindung ein Verfahren zum Bestimmen eines Werts wenigstens eines auf wenigstens einen in wenigstens einem Kompartiment eines dynamischen Systems angeordneten Stoff wirkenden Prozessparameters unter Verwendung des vorstehend beschriebenen Messsystems.

In einer möglichen Ausgestaltung des vorgestellten Verfahrens ist vorgesehen, dass das Verfahren die folgenden Schritte umfasst:

a) Bestimmen eines Differenzwerts zwischen wenigstens einem mittels eines ersten Drucksensors ermittelten Messwert und wenigstens einem mittels eines zweiten Drucksensors ermittelten Messwert, wobei der erste Drucksensor und der wenigstens eine zweite Drucksensor in wenigstens einem Kompartiment angeordnet sind;

b) Abgleichen des in Schritt a) ermittelten Differenzwerts mit einer Zuordnungstabelle, um einen Prozessparameter zu bestimmen, der auf einen in dem wenigstens einen Kompartiment angeordneten Stoff wirkt.

Das vorgestellte Verfahren dient insbesondere zum Betrieb des vorgestellten Messsystems bzw. des vorstehend beschriebenen dynamischen Systems, insbesondere Rotationssystems.

Weitere Einzelheiten und Vorteile der Erfindung sollen nun anhand von in den Figuren gezeigten Ausführungsbeispielen näher beschrieben werden.

Es zeigen:

Fig. 1    ein mögliches Ausführungsbeispiel eines erfindungsgemäßen Messsystems für ein Ausführungsbeispiel eines erfindungsgemäßen dynamischen Systems, hier einer Zentrifuge, zur Durchführung des erfindungsgemäßen Verfahrens;

Fig. 2    ein Flussdiagramm eines Ablaufs einer möglichen Ausgestaltung eines Ausführungsbeispiels des erfindungsgemäßen Verfahrens;

Fig. 3    eine mögliche Ausgestaltung eines Ausführungsbeispiels eines dynamischen Systems, hier eines Rotationssystems (Zentrifuge) mit einer möglichen Ausgestaltung des vorgestellten Messsystems;

Fig. 4    ein Zuordnungsschema von mittels einer möglichen Ausgestaltung des vorgestellten Messsystems ermittelten Messwerten zu einem Wert einer Drehzahl eines Rotationssystems;

Fig. 5    ein Flussdiagramm eines Ablaufs einer Initialisierung einer möglichen Ausgestaltung des vorgestellten Messsystems zur Durchführung einer möglichen Ausgestaltung des vorgestellten Verfahrens;

Fig. 6    eine mögliche Ausgestaltung des vorgestellten Messsystems mit einem Dehnungsmessstreifen; und

Fig. 7    einen Verlauf von bei einem Zentrifugationsvorgang auf ein Probengefäß wirkenden Kräften.

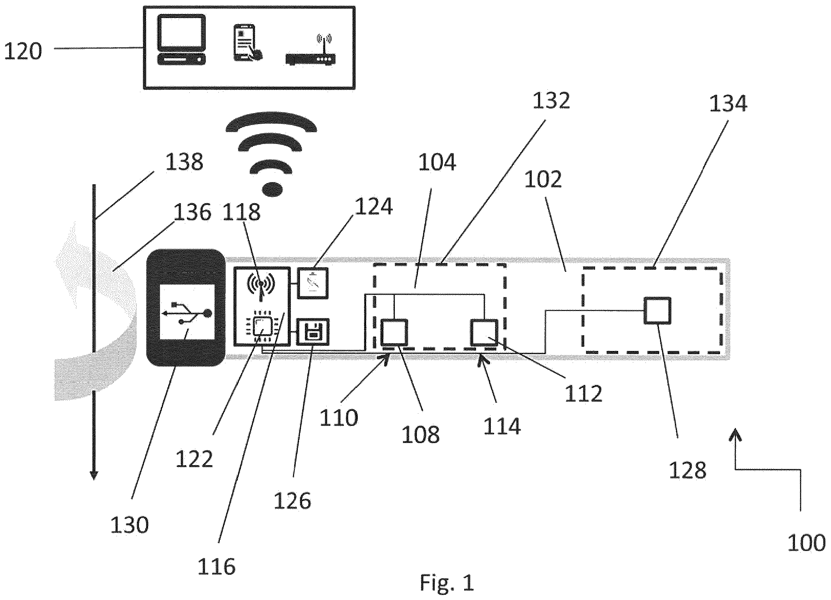

Figur 1 zeigt ein mögliches Ausführungsbeispiel eines erfindungsgemäßen Messsystems 100 für ein Ausführungsbeispiel eines erfindungsgemäßen dynamischen Systems, hier einer Zentrifuge, zur Durchführung des erfindungsgemäßen Verfahrens.

Das Messsystem 100 weist eine Messeinheit 102 auf.

In der Messeinheit 102 ist eine Sensoreinheit 104 angeordnet.

In der gezeigten Ausführungsform ist die Sensoreinheit 104 als Differentialdrucksystem ausgebildet, bestehend aus einem ersten Drucksensor 108 an einem ersten Ort 110 und einem zweiten Drucksensor 112 an einem zweiten Ort 114.

Weiter weist das Messsystem 100 eine Steuerungseinheit 116 auf. Die Steuerungseinheit 116 dient zum Steuern des Messsystems 100, insbesondere zum Verarbeiten von durch den Sensor 104 ermittelten Messwerten.

Hier weist die Steuerungseinheit 116, die bspw. als integrierter Schaltkreis ausgestaltet ist, ein Kommunikationsmodul 118 zur drahtlosen Kommunikation mit einer Auswerteeinheit 120 und einen Prozessor 122 zum Ausführen von zur Steuerung des Messsystems 100 notwendigen Rechenoperationen.

Die Auswerteeinheit 120 ist bspw. ein Server, ein Computer, ein Smartphone oder ein Gateway.

In einer möglichen Ausgestaltung des vorgestellten Messsystems 100 kann das Kommunikationsmodul 118 als ein Bluetoothmodul ausgebildet sein.

Das Messsystem 100 weist einen Speicher 124 auf. Der Speicher 124 steht in kommunikativer Verbindung mit der Steuerungseinheit 116.

Die Steuerungseinheit 116 wird von einer Energiequelle 126 mit elektrischer Energie versorgt.

Die Energiequelle 126 ist bspw. eine Batterie oder eine Vorrichtung zum drahtlosen Empfang von Energie, wie bspw. eine induktive Versorgungsstation.

In dem in Figur 1 gezeigten Ausführungsbeispiel umfasst das Messsystem 100 auch einen Temperatursensor 128. Der Temperatursensor 128 dient insbesondere zum Erfassen einer Temperatur in der Messeinheit 102.

Insbesondere kann vorgesehen sein, dass um den Temperatursensor herum eine austauschbare Referenzsubstanz angeordnet ist (z.B. in einem gekapseltem Messraum).

Außerdem ist vorgesehen, dass das Messsystem 100 eine Kommunikationsschnittstelle 130 zur kabelgebundenen Auswertung von durch den Sensor 104 ermittelten Messdaten umfasst.

Für den Fall, dass eine Übertragung von Messdaten durch das Kommunikationsmodul 118 nicht funktionieren sollte, können die Messdaten über die Kommunikationsschnittstelle 130 aus dem Speicher 124 ausgelesen werden.

Das Messsystem 100 eine ersten Messraum 132, hier ausgebildet als Messkapsel. Der erste Messraum 132 dient insbesondere zur Aufnahme der Sensoreinheit 104.

In einer möglichen Ausgestaltung des Messsystems 100 ist der erste Messraum 132 mit einem Referenzgas bzw. einem Referenzfluid gefüllt.

In einer weiteren möglichen Ausgestaltung umfasst das Messsystem 100 einen zweiten Messraum 134, hier ebenfalls als Messkapsel ausgeführt. Der zweite Messraum 134 dient insbesondere zur Aufnahme des Temperatursensors 128.

In einer möglichen Ausgestaltung ist der zweite Messraum 134 mit einem Referenzgas bzw. einem Referenzfluid gefüllt.

Beim Betrieb eines Rotationssystems wird die Messeinheit 102 in ein Kompartiment, hier einen Probenhalter einer Zentrifuge (nicht näher dargestellt, nur durch die Drehachse 138 und den Pfeil 136 repräsentiert) eingesetzt und beschleunigt. Dabei wirkt auf die Messeinheit 102 dieselbe Zentrifugalkraft, wie durch einen gedrehten Pfeil 136 angedeutet und dieselbe Gravitationskraft, wie durch Pfeil 138 angedeutet, die auch auf die Probe wirkt.

Anhand von durch den ersten Drucksensor 108 und den zweiten Drucksensor 112 ermittelten Messwerten kann eine Druckdifferenz zwischen dem ersten Ort 110 und dem zweiten Ort 114 bestimmt werden. Mittels einer Zuordnungstabelle (die z.B. in einem Speicher der Auswerteeinheit 120 hinterlegt und entsprechend für die Auswertung herangezogen werden kann) kann anhand der Zuordnungstabelle ein auf das Probengefäß wirkender Prozessparameter, wie bspw. eine Zentrifugalkraft, bestimmt werden.

Da sich eine Zuordnung einer mittels des ersten Drucksensors 108 und des zweiten Drucksensors 112 ermittelten Druckdifferenz zu einem jeweiligen Wert eines Prozessparameters in Abhängigkeit einer aktuellen Temperatur in der Messeinheit 102 ändern kann, ist in Ausgestaltung vorgesehen, dass eine aktuell ermittelte Druckdifferenz in Abhängigkeit von durch den Temperatursensor 128 aktuell ermittelten Temperaturwerten korrigiert wird.

Durch den ersten Drucksensor 108 und den zweiten Drucksensor 112 kann ein auf einen in dem Probengefäß angeordneten Stoff wirkender Prozessparameter, wie bspw. eine Zentrifugalkraft bestimmt werden.

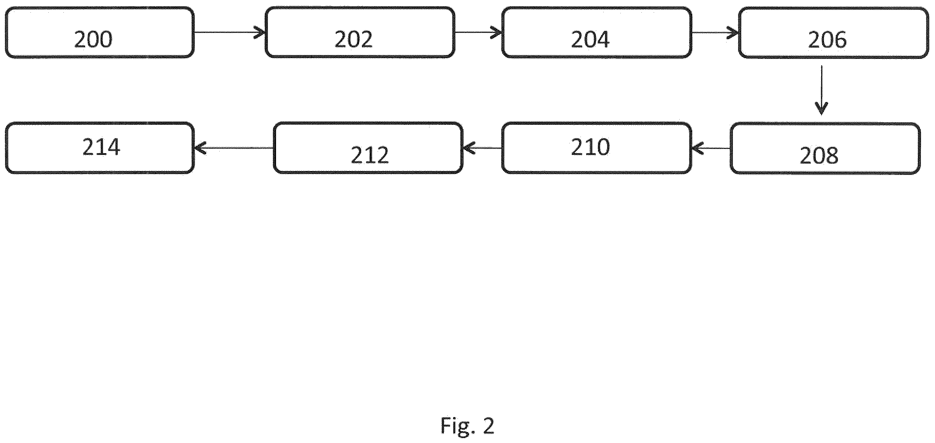

In Figur 2 ist ein Ablauf einer Inbetriebnahme einer möglichen Ausgestaltung des vorgestellten Messsystems 100 dargestellt.

In einem Einschaltschritt 200 wird eine Stromversorgung des Messsystems 100 bspw. durch Umlegen eines Schalters aktiviert.

In einem Registrierungsschritt 202 wird eine jeweilige verwendete Messeinheit an einer jeweiligen verwendeten Auswerteeinheit, wie bspw. einem Sever, einem Smartphone oder einem Gateway registriert.

In einem Co-Registrierungsschritt 204 wird eine Konfiguration eines zu qualifizierenden Rotationssystems auf der Auswerteeinheit und/oder der Messeinheit abgelegt.

In einem Kalibrierungsschritt 206 wird ein Nullwert eines Differentialdrucksystems der Messeinheit ermittelt bzw. auf eine Referenzdrehzahl eingestellt. Entsprechende Kalibrierungswerte werden auf der Messeinheit und/oder der Auswerteeinheit abgelegt.

In einem Platzierungsschritt 208 wird die Messeinheit 102 in die Zentrifuge eingebracht.

Dies kann z.B. direkt in dem Bereich sein, in dem auch der interessierende Stoff bzw. die Probe eingebracht ist, also im selben Probenhalter. Denkbar ist aber auch, dass in einem Probenhalter die Probe und in einem anderen Probenhalter nach Art eines Gegengewichtes die Messeinheit eingebracht wird.

In einem Startschritt 210 wird ein Rotationsdurchlauf gestartet.

In einem Auswertungsschritt 212 erfolgt eine Datenübertragung und ggf. eine parallele Auswertung. Dabei können die übertragenen Daten kontinuierlich per Funk oder sequentiell durch Auslesen eines Speichers am Ende eines jeweiligen Rotationslaufs erfasst und ggf. durch eine Auswerteeinheit visualisiert werden.

In einem Entnahmeschritt 214 wird die Messeinheit aus dem Rotationssystem entnommen.

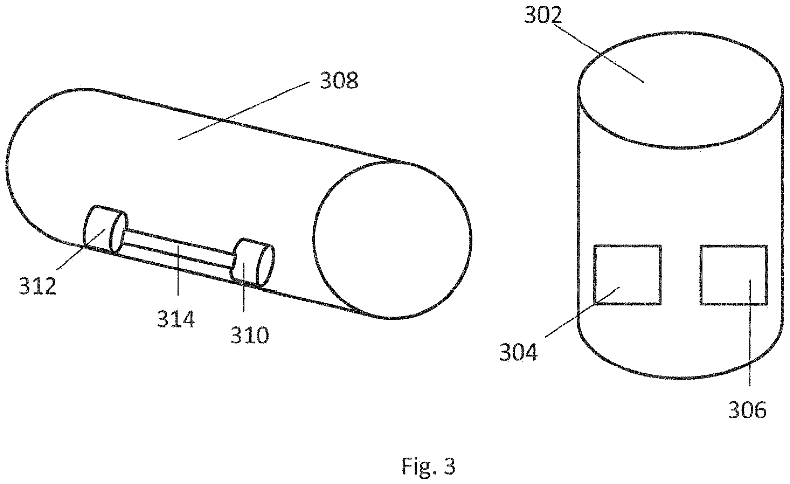

In Figur 3 ist eine Ausführungsform des vorgestellten Systems in Form eines Rotationssystems 302, hier einer Zentrifuge, dargestellt. Das Rotationssystem 302 umfasst eine Steuerungseinheit 304 zum Steuern eines Antriebs 306. Der Antrieb dreht einen Rotationskörper (nicht dargestellt) des Rotationssystems 302.

Das Rotationssystem 302 ist zur Aufnahme eines Probegefäßes und einer in dem Probegefäß anzuordnenden Messeinheit 308 konfiguriert.

Die Messeinheit 308 umfasst einen ersten Sensor 310 und einen zweiten Sensor 312.

In einer Ausgestaltung der Messeinheit 308 ist zwischen dem ersten Sensor 310 und dem zweiten Sensor 312 eine gedruckte Leiterplatte bzw. ein integrierter Schaltkreis 314 angeordnet.

Der integrierte Schaltkreis 314 umfasst eine Steuerungselektronik zum Steuern des ersten Sensors 310 und des zweiten Sensors 312.

Durch den integrierten Schaltkreis 314 werden von dem ersten Sensor 310 und dem zweiten Sensor 312 erfasste Messwerte zwischengespeichert und ggf. über eine Kommunikationsschnittstelle, wie bspw. eine WLAN-, Bluetooth- oder Mobilfunkschnittstelle an einen Kommunikationspartner, wie bspw. einen Server übertragen.

In Ausgestaltung sind der Server und/oder der integrierte Schaltkreis 314 dazu konfiguriert, einen während eines Betriebs des Rotationssystems 302 auf einen in dem Rotationssystem 302 angeordneten Stoff wirkenden Prozessparameter, wie bspw. eine Zentrifugalbeschleunigung, insbesondere unter Verwendung der Formeln (1) bis (5) zu ermitteln und den Antrieb 306 einem aktuellen Wert des Prozessparameters entsprechend zu steuern.

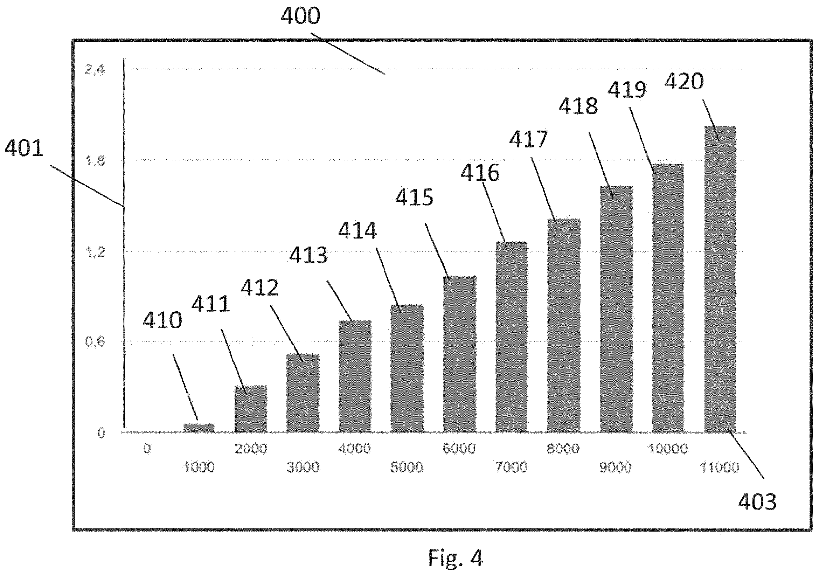

In Figur 4 ist ein Zuordnungsschema 400 dargestellt. Das Zuordnungsschema ist in Form eines Diagramms gestaltet, das auf einer Ordinate 401 einen Messwert und auf einer Abszisse 403 eine Drehzahl als Prozessparameter angibt. Jeweilige Balken 410 bis 420 zeigen eine einem Messwert entsprechende Drehzahl an. Entsprechend ist es möglich, mittels des Zuordnungsschemas 400 anhand eines jeweiligen Messwerts eine entsprechende Drehzahl eines Rotationssystems zu bestimmen.

In einer möglichen Ausgestaltung wird der Messwert mittels eines Differentialdrucksystems aus zwei beabstandet voneinander angeordneten Drucksensoren ermittelt. Entsprechend wird in Abhängigkeit eines aktuell ermittelten Differenzwerts zwischen jeweiligen Messwerten der beiden Drucksensoren mittels des Zuordnungsschemas 400 eine aktuelle Drehzahl des Rotationssystems bestimmt.

Die Balken 410 bis 420 sind hier jeweils bestimmten Sensoranordnungen mit einem bestimmten Sensorabstand zugeordnet. Entsprechend ist der erste Balken 410 einer ersten Sensoranordnung und der elfte Balken 420 einer elften Sensoranordnung zugeordnet.

Von der ersten Sensoranordnung bis zu der letzten bzw. elften Sensoranordnung sind die entsprechenden Sensorabstände sequentiell abnehmend vorgesehen, so dass sich ein Messfehler von der ersten Sensoranordnung bis zu der elften Sensoranordnung bzw. von dem ersten Balken 410 bis zu dem elften Balken 420 sequentiell reduziert.

Aufgrund des sequentiell abnehmenden Sensorabstands und des dadurch bedingt abnehmenden Messfehlers ist es anhand der ersten Sensoranordnung lediglich möglich eine Drehzahl bis zu einem Wert von ca. 1000 zu bestimmen, wie durch den Balken 410 angedeutet, wohingegen die elfte Sensoranordnung es ermöglicht, eine Drehzahl bis zu einem Wert von 11000 zu bestimmen, wie durch den Balken 420 angedeutet. Grundsätzlich sind auch andere Werte, insbesondere höhere Werte denkbar.

Weiterhin spannt sich eine mittels einer jeweiligen Sensoranordnung messbare Druckdifferenz bzw. ein entsprechender Druckgradient bei niedrigen Drehzahlen über eine lange Distanz auf, so dass die Druckdifferenz bei niedrigen Drehzahlen nicht oder nur ungenau mittels bspw. der elften Sensoranordnung zu erfassen ist. Entsprechend wird bei niedrigen Drehzahlen die erste Sensoranordnung bzw. eine entsprechende Sensoranordnung mit einem geeigneten Sensorabstand gewählt.

In dem Zuordnungsschema zeigt sich, dass die einer jeweiligen Sensoranordnung ein jeweiliger Drehzahlbereich zugeordnet ist, so dass bei Erreichen einer Drehzahlgrenze von bspw. 4000 auf eine jeweils folgende Sensoranordnung mit einem kleineren Sensorabstand umgeschaltet wird, für den Fall dass sich die Drehzahl des Rotationssystems kontinuierlich erhöht.

Für den Fall, dass sich die Drehzahl des Rotationssystems kontinuierlich verringert, ist es entsprechend vorgesehen, dass bei Erreichen einer jeweiligen Drehzahlgrenze von bspw. 3000 auf eine jeweilige folgende Sensoranordnung mit einem größeren Sensorabstand umgeschaltet wird.

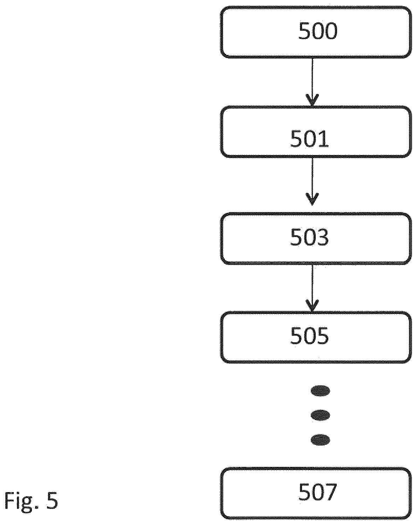

In Figur 5 ist ein Ablauf einer möglichen Ausgestaltung des vorgestellten Verfahrens dargestellt. Ausgehend von einer Startprozedur 500, bei der ein Rotor einer Zentrifuge in Rotation versetzt wird, wird über paarige an einem ersten Kompartiment der Zentrifuge angeordnete Sensoren ein Differenzdruck, d. h. ein Differenzwert von durch die Sensoren erfassten Drücken, ermittelt.

In einem ersten Bestimmungsschritt 501 wird anhand des Differenzdrucks eine auf einen in dem ersten Kompartiment wirkende Zentrifugalbeschleunigung bestimmt.

In einem zweiten Bestimmungsschritt 503 wird eine auf einen in einem zweiten Messraum angeordneten Stoff wirkende Zentrifugalbeschleunigung anhand von durch an dem zweiten Messraum angeordneten Sensoren erfassten Drücken bestimmt.

Während sich eine Drehzahl der Zentrifuge erhöht, erhöht sich auch eine auf jeweilige Kompartimente der Zentrifuge wirkende Zentrifugalbeschleunigung (und damit auch entsprechend auf die Messräume des in die Zentrifuge eingesetzten Messystems 100), wodurch ein in einem jeweiligen Kompartiment anliegender Druckgradient über eine kleiner werdende Strecke hinweg erfassbar wird. Da ein Messfehler bei einem großen Abstand zwischen jeweiligen Sensoren in der Regel größer ist als bei einem kleinen Abstand, wird bei steigender Drehzahl bzw. bei Erreichen einer vorgegebenen Drehzahlschwelle, die Zentrifugalbeschleunigung mittels Sensoren bestimmt, die näher aneinander angeordnet sind als dies an einem ursprünglich verwendeten Kompartiment der Fall ist. Entsprechend zeigt die mittels der näher aneinander angeordneten Sensoren ermittelte Zentrifugalbeschleunigung einen kleineren Messfehler als die mittels der in dem ursprünglich verwendeten Kompartiment angeordneten Sensoren ermittelte Zentrifugalbeschleunigung.

Je nach Drehzahl werden weitere Bestimmungsschritte 505 bis 507 mittels Kompartimenten durchgeführt, deren Sensoren in jeweils stetig kleineren Abständen angeordnet sind, so dass sich ein Messfehler entsprechend erfasster Zentrifugalbeschleunigungen kontinuierlich reduziert.

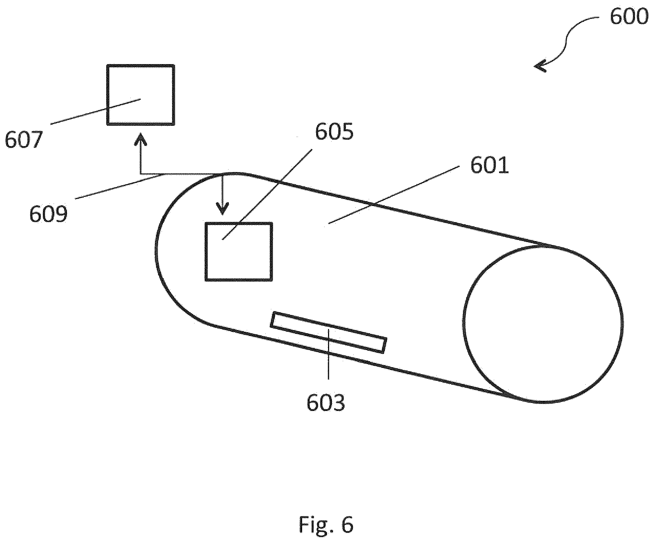

In Figur 6 ist ein weiteres mögliches alternatives (oder zusätzlich zu Messsystem 100 denkbares) erfindungsgemäßes Ausführungsbeispiel eines Messsystems 600 dargestellt.

Das Messsystem 600 umfasst eine Messeinheit 601. An der Messeinheit 601 ist ein Dehnungsmessstreifen 603 angeordnet.

In einer möglichen Ausgestaltung umfasst die Messeinheit 601 eine Steuerungseinheit 605, die über eine Drahtlosverbindung mit einer Auswerteeinheit 607 in Verbindung steht, wie durch Pfeil 609 angedeutet.

Die Steuerungseinheit 605 ist dazu konfiguriert, durch eine Beschleunigung und eine entsprechende Verformung des Dehnungsmessstreifens 603 bedingte elektrische bzw. magnetische Änderungen des Dehnungsmessstreifens 603 zu erfassen.

Anhand der durch die Steuerungseinheit 605 erfassten elektrischen bzw. magnetischen Änderungen kann die Steuerungseinheit 605 und/oder die Auswerteeinheit 607 einen aktuellen Wert mindestens eines auf die Messeinheit 600 einwirkenden Prozessparameters bestimmen.

Das vorgestellte Messsystem basiert auf einer Messeinheit, die in ein Probengefäß integriert wird. Durch die Integration der Messeinheit in das Probengefäß kann eine Messung von Zentrifugalkräften erfolgen, die in dem Probengefäß beim Betrieb eines das Probengefäß umfassenden Rotationssystems resultieren und die auf eine in dem Probengefäß angeordnete Probe einwirken. Dies bedeutet, das vorgestellte Messsystem ermöglicht eine Messung an dem Ort, an dem sich eine jeweilige Probe befindet (Point of interest Messung). Dabei kann die Messung insbesondere in Abhängigkeit von Drehzahl und Durchmesser des Rotationssystems erfolgen.

Entsprechend ermöglicht das vorgestellte Messsystem eine Messung von Kräften bzw. Einflüssen, die direkt an einer Probe ankommen. Anhand von durch einen Sensor der Messeinheit ermittelten Werten kann, bspw. unter Berücksichtigung von mittels eines außerhalb eines Probengefäßes vorgesehenen Zählwerks oder eines Winkelmessers ermittelten Informationen über einen Betriebspunkt des Rotationssystems, auf Prozessparameter geschlossen werden, die auf die Probe einwirken.

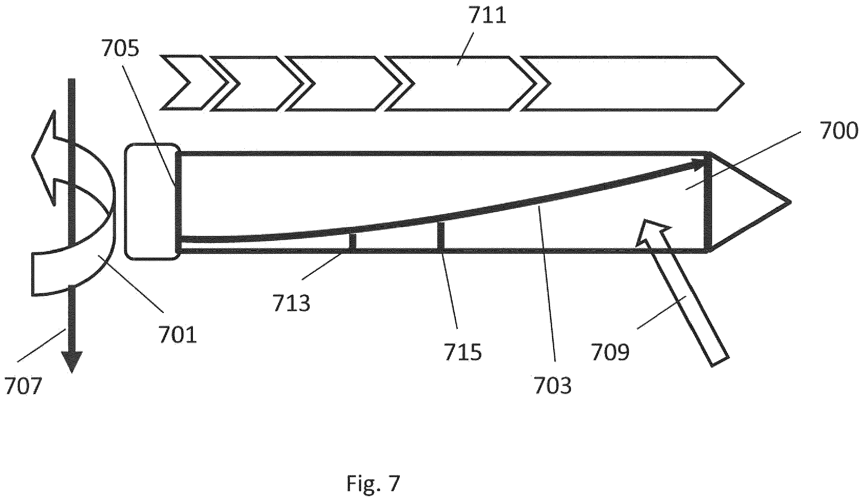

In Figur 7 ist ein Probengefäß 700 dargestellt, das sich in einer Zentrifuge dreht, wie durch einen Rotationspfeil 701 angedeutet. Durch die Rotation der Zentrifuge wirkt auf das Probengefäß 700 bzw. in dem Probengefäß 700 ein Druck, dessen Verlauf durch eine Kurve 703 angedeutet ist. Es ist erkennbar, dass der Druck mit steigendem Radius, d. h. mit zunehmendem Abstand zu einem Zentrifugenmittelpunkt bzw. einem ersten Ende 705 des Probengefäßes 700 zu nimmt. Während die Zentrifuge sich dreht, wirkt auf das Probengefäß 700 weiterhin eine Gravitationskraft, wie durch einen ersten Pfeil 707 angedeutet. Ein Luftvolumen, das durch eine Beschleunigung des Probengefäßes 700 und den dadurch bedingt in dem Probengefäß wirkenden Druck komprimiert wird, ist durch einen zweiten Pfeil 709 angedeutet.

Ein unterbrochen dargestellter dritter Pfeil 711 deutet einen Verlauf einer auf das Probengefäß 700 bzw. in dem Probengefäß 700 wirkenden Beschleunigung an. Unter der Annahme, dass das Verhalten des Drucks mit einer barometrischen Luftsäule vergleichbar ist, kann ein Wert eines Prozessparameters, wie bspw. der Druck P an einem Ort innerhalb des Probengefäßes 700 bestimmt werden. Dazu können folgende mathematischen Zusammenhänge verwendet werden.

$$\frac{dp}{dh} = -\rho \cdot g \tag{1}$$

$$a(r) = \omega^2 r = (2\pi f)^2 r \tag{2}$$

$$\frac{dp}{dr} = \rho a(r) = \frac{Mp}{RT}(2\pi f)^2 r \tag{3}$$

$$\frac{dp}{p} = \frac{M(2\pi f)^2}{RT} r dr \tag{4}$$

$$p(r) = p_0 e^{\frac{M(2\pi f)^2}{RT} \cdot \frac{r^2}{2}} + \Delta p \tag{5}$$

Formel (1) gibt die barometrische Höhenformel an. In den Formeln (1) bis (5) stehen "$dh$" für eine infinitesimal kleine Höhe, eines Volumens, welches Luft der Dichte "$\rho$" enthält. Auf das Volumen wirkt der Atmosphärendruck "$p$", der sich zwischen einer Grundfläche des Volumens und einer maximalen Höhe des Volumens um einen Betrag "$dp$" unterscheidet. Der Faktor "g" gibt dabei die Erdbeschleunigung an. Das Formelzeichen "$a(r)$" steht eine Zentrifugalbeschleunigung bei einer Kreisbewegung in Abhängigkeit einer Drehfrequenz "$\omega$" und eines Radius "$r$". Weiterhin stehen "$dr$" für eine Strecke zwischen zwei Messpunkten und "$\rho a(r)$" für einen Differenzialdruck zwischen den beiden Messpunkten. "$R$" gibt eine allgemeine Gaskonstante und "$T$" eine Temperatur an. "M" gibt die Molaremasse an. "$\Delta p$" gibt eine Druckdifferenz zwischen zwei Messpunkten "$p(r)$" einen Druck an einem Punkt von Interesse und "$p_0$" einen Druck an einem Ausgangs- bzw. Referenzpunkt an.

Unter Berücksichtigung der voranstehend dargelegten Annahmen können die Gleichungen (1) bis (5) nach einem jeweiligen Parameter, wie bspw. einem Druck an einer bestimmten Stelle "$p(r)$" 715 aufgelöst werden.

Es ist denkbar, dass der Druck "$p_0$" an dem Referenz- bzw. Ausgangspunkt 713, bspw. unter Verwendung eines Drucksensors im Inneren der Zentrifuge erfasst wird.

Weiterhin ist es denkbar, dass der Druck an der bestimmten Stelle "$p(r)$" 715 mittels eines Sensors einer möglichen Ausgestaltung des vorgestellten Messsystems ermittelt wird. Dazu kann der Sensor bspw. in Form einer Kapsel in das Probengefäß 700 gegeben werden.

Ferner ist denkbar, dass der Druck "$p(r)$" an der bestimmten Stelle 715 mittels eines von einer möglichen Ausgestaltung des vorgestellten Messsystems umfassten Sensors erfasst wird.

Unter Verwendung des Drucks "$p(r)$" an der bestimmten Stelle 715 und des Drucks "$p_0$" an dem Referenz- bzw. Ausgangspunkt 713 bzw. einer entsprechenden Druckdifferenz kann unter Berücksichtigung der voranstehend dargelegten mathematischen Zusammenhänge eine Drehfrequenz "$\omega$" bzw. eine Zentrifugalbeschleunigung "$a(r)$" der Zentrifuge bestimmt werden.

BEZUGSZEICHENLISTE

| | |
|---|---|
| 100 | Messsystem |
| 102 | Messeinheit |
| 104 | Sensoreinheit |
| 108 | erster Drucksensor |
| 110 | erster Ort |
| 112 | zweiter Drucksensor |
| 114 | zweiter Ort |
| 116 | Steuerungseinheit |
| 118 | Kommunikationsmodul |
| 120 | Auswerteeinheit |

| 122 | Prozessor |
| 124 | Speicher |
| 126 | Energiequelle |
| 128 | Temperatursensor |
| 130 | Kommunikationsschnittstelle |
| 132 | Messraum |
| 134 | Messraum |
| 136 | gedrehter Pfeil |
| 138 | Pfeil |
| 200 | Einschaltschritt |
| 202 | Registrierungsschritt |
| 204 | Co-registrierungsschritt |
| 206 | Kalibrierungsschritt |
| 208 | Platzierungsschritt |
| 210 | Startschritt |
| 212 | Auswertungsschritt |
| 214 | Entnahmeschritt |
| 302 | Rotationssystem |
| 304 | Steuerungseinheit |
| 306 | Antrieb |
| 308 | Messeinheit |
| 310 | erster Sensor |
| 312 | zweiter Sensor |
| 314 | integrierter Schaltkreis |
| 400 | Zuordnungsschema |
| 401 | Ordinate |
| 403 | Abszisse |
| 410 - 420 | Balken |
| 500 | Startprozedur |
| 501 | erster Bestimmungsschritt |
| 503 | zweiter Bestimmungsschritt |
| 505 - 507 | weitere Bestimmungsschritte |
| 600 | Messsystem |
| 601 | Messeinheit |
| 603 | Dehnungsmessstreifen |
| 605 | Steuerungseinheit |
| 607 | Auswerteeinheit |
| 609 | Pfeil |
| 700 | Probengefäß |
| 701 | Rotationspfeil |
| 703 | Kurve |
| 705 | erstes Ende |
| 707 | erster Pfeil |
| 709 | zweiter Pfeil |
| 711 | dritter Pfeil |
| 713 | Referenzpunkt |
| 715 | Stelle "$p(r)$" |

**Patentansprüche**

1. Messsystem (100, 600) zum Einsatz in einem dynamischen System, insbesondere in einem Rotationssystem (302), wobei das dynamische System ein oder mehrere Kompartimente aufweist, und wobei das Messsystem (100, 600) im Betrieb in das dynamische System eingesetzt oder einsetzbar ist und zum Bestimmen eines Werts wenigstens eines auf einen in wenigstens einem Kompartiment des dynamischen Systems angeordneten Stoff wirkenden Prozessparameters eingerichtet und bestimmt ist, wobei das Messsystem (100, 600) wenigstens einen zumindest teilweise in wenigstens einem Kompartiment des dynamischen Systems (302) anordenbare Sensoreinheit (104) und eine Auswerteeinheit (120, 607) umfasst, wobei die Auswerteeinheit (120, 607) dazu konfiguriert ist, anhand von durch die wenigstens eine Sensoreinheit (104) ermittelten Messwerten einen aktuellen Wert wenigstens eines auf einen in dem Kompartiment angeordneten Stoff wirkenden Prozessparameters zu bestimmen, wobei die wenigstens eine Sensoreinheit (104) wenigstens einen ersten Drucksensor (108, 310) und wenigstens einen zweiten Drucksensor (112, 312) umfasst, **dadurch gekennzeichnet, dass** das Messsystem (100, 600) mehrere Sensoreinheiten mit jeweils wenigstens einem ersten Drucksensor (108, 310) und jeweils wenigstens einem zweiten Drucksensor (112, 312) umfasst, wobei die Sensoreinheiten an und/oder in einer Vielzahl Kompartimente des dynamischen Systems anzuordnen sind, wobei in einem Betriebszustand, in dem sich Abstände zwischen jeweiligen an verschiedenen Kompartimenten anzuordnenden ersten Drucksensoren (108, 310) und zweiten Drucksensoren (112, 312) voneinander unterscheiden, die Auswerteeinheit dazu konfiguriert ist, diejenigen Drucksensoren (108, 112, 304, 312, 603) zur Bestimmung eines aktuellen Werts des wenigstens einen Prozessparameters zu verwenden, die in einem Kompartiment angeordnet sind, das gemäß einer Zuordnungstabelle (400) und/oder Zuordnungsdaten einem aktuellen Betriebszustand des dynamischen Systems (302) zugeordnet ist.

2.  Messsystem (100, 600) nach Anspruch 1, **dadurch gekennzeichnet, dass** der wenigstens eine erste Drucksensor (108, 310) und der wenigstens eine zweite Drucksensor (112, 312) ein Differentialdrucksystem (104) bilden.

3.  Messsystem (100, 600) nach Anspruch 1 oder Anspruch 2, **dadurch gekennzeichnet, dass** die jeweiligen an und/oder in einem jeweiligen Kompartiment anzuordnenden Drucksensoren (108, 112, 304, 312, 603) beweglich angeordnet sind oder angeordnet werden, insbesondere derart, dass sich in Abhängigkeit von der Drehzahl eines Rotors des als Rotationssystem ausgeführten dynamischen Systems (302) eine Distanz zwischen den an und/oder in dem jeweiligen Kompartiment angeordneten Drucksensoren (108, 112, 304, 312, 603) verändert, insbesondere verringert oder vergrößert.

4.  Messsystem (100, 600) nach einem der voranstehenden Ansprüche, **dadurch gekennzeichnet, dass** das Messsystem (100, 600) wenigstens einen Lagesensor zum Ermitteln einer Neigung wenigstens eines Kompartiments umfasst.

5.  Messsystem (100, 600) nach Anspruch 4, **dadurch gekennzeichnet, dass** die Auswerteeinheit (120, 607) dazu konfiguriert ist, im Betrieb von dem wenigstens einen Sensor (108, 112, 304, 312, 603) ermittelte Messwerte unter Verwendung der mittels des Lagesensors ermittelten Neigung des wenigstens einen Kompartiments zu korrigieren.

6.  Messsystem (100, 600) nach Anspruch 5, **dadurch gekennzeichnet, dass** die Auswerteeinheit (120, 607) dazu konfiguriert ist, im Betrieb anhand eines Abgleichs von aktuell durch den wenigstens einen Lagesensor ermittelten Messwerten mit wenigstens einem Referenzwert eine Lage eines jeweiligen Kompartiments und/oder des Rotationssystems (302) zu überprüfen und für den Fall, dass eine Abweichung zwischen den aktuell durch den wenigstens einen Lagesensor ermittelten Messwerten und dem wenigstens einen Referenzwert größer ist als ein vorgegebener Schwellenwert, mittels einer Ausgabeeinheit eine Warnung auszugeben.

7.  Messsystem (100, 600) nach einem der voranstehenden Ansprüche, **dadurch gekennzeichnet, dass** das Messsystem (100, 600) wenigstens einen außerhalb eines jeweiligen Kompartiments anzuordnenden externen Sensor zum Erfassen wenigstens eines Betriebsparameters des dynamischen Systems (302) umfasst, wobei die Auswerteeinheit (120, 607) dazu konfiguriert ist, jeweilige von dem wenigstens einen zumindest teilweise in dem Kompartiment anzuordnenden Sensor (108, 112, 304, 312, 603) ermittelte Messwerte unter Verwendung von durch den externen Sensor ermittelten Messwerten zu korrigieren.

8.  Messsystem (100, 600) nach einem der voranstehenden Ansprüche, **dadurch gekennzeichnet, dass** das Messsystem (100, 600) wenigstens einen Temperatursensor (128) umfasst, wobei die Auswerteeinheit (120, 607) dazu konfiguriert ist, jeweilige mittels des wenigstens einen Sensors (108, 112, 304, 312, 603) ermittelte Messwerte unter Verwendung von durch den wenigstens einen Temperatursensor (128) ermittelten Werten zu korrigieren.

9.  Messsystem (100, 600) nach einem der voranstehenden Ansprüche, **dadurch gekennzeichnet, dass** die wenigstens eine Sensoreinheit (104) eine von einer Hüllstruktur umgebene Messeinheit (102, 601) ausbildet.

10. Messsystem (100, 600) nach Anspruch 9, **dadurch gekennzeichnet, dass** die Hüllstruktur wenigstens eine Referenzsubstanz einschließt, insbesondere wobei die Referenzsubstanz austauschbar ist.

11. Messsystem (100, 600) nach Anspruch 10, **dadurch gekennzeichnet, dass** die Referenzsubstanz ausgewählt ist aus der folgenden Liste an Referenzsubstanzen: Gas, Gasgemisch, Flüssigkeitsgemisch, Flüssigkeit, Glycerin.

12. Messsystem (100, 600) nach einem der voranstehenden Ansprüche, **dadurch gekennzeichnet, dass** das Messsystem (100, 600) wenigstens ein Kommunikationsmodul mit einer Kommunikationsschnittstelle umfasst und dazu konfiguriert ist, von dem wenigstens einen Sensor (08, 112, 304, 312, 603) erfasste Messwerte und/oder aktuell ermittelte Werte des wenigstens einen Prozessparameters mittels der wenigstens einen Kommunikationsschnittstelle (118, 130) an die Auswerteeinheit (120, 607) zu übertragen.

13. Messsystem (100, 600) nach einem der voranstehenden Ansprüche, **dadurch gekennzeichnet, dass** das Messsystem (100, 600) einen Speicher (124) und eine Steuerungseinheit (314, 605) umfasst, wobei die Steuerungseinheit (314, 605) dazu konfiguriert ist, zumindest einen Teil der durch den wenigstens einen Sensor (101, 103, 501) erfassten Werte in dem Speicher (124) für eine Übertragung zu der Auswerteeinheit (120, 607) zwischenzuspeichern.

14. Messsystem (100, 600) nach einem der voranstehenden Ansprüche, **dadurch gekennzeichnet, dass** die wenigstens eine Sensoreinheit (104) wenigstens einen Dehnungsmessstreifen (603) aufweist, der sich in Abhängigkeit einer auf den Dehnungmessstreifen (603) wirkenden Beschleunigung verformt, wobei die Auswerteeinheit (120, 607) dazu konfiguriert ist, anhand einer durch den Dehnungsmessstreifen (603) erfassten Verformung den aktuellen Wert des wenigstens einen Prozessparameters zu bestimmen.

15. Dynamisches System, insbesondere Rotationssystem (302), mit einem Messsystem (100, 600) nach einem der voranstehenden Ansprüche.

16. Dynamisches System nach Anspruch 15, **dadurch gekennzeichnet, dass** das dynamische System (302) eine Steuerungseinheit (304) umfasst, wobei die Steuerungseinheit (304) dazu konfiguriert ist, einen Antrieb (306) zum Bewegen eines Rotors des Rotationssystems in Abhängigkeit eines mittels des Messsystems (100, 600) ermittelten aktuellen Werts wenigstens eines auf einen in wenigstens einem Kompartiment des Rotationssystems (302) angeordneten Stoff wirkenden Prozessparameters zu steuern.

17. Verfahren zum Bestimmen eines Werts wenigstens eines auf wenigstens einen in wenigstens einem Kompartiment eines dynamischen Systems, insbesondere eines Rotationssystems (302), angeordneten Stoff wirkenden Prozessparameters unter Verwendung eines Messsystems (100, 600) nach einem der voranstehenden Ansprüche 1 bis 14.

18. Verfahren nach Anspruch 17, **dadurch gekennzeichnet, dass** das Verfahren die folgenden Schritte umfasst:

   a) Bestimmen eines Differenzwerts zwischen wenigstens einem mittels eines ersten Drucksensors (108, 310) ermittelten Messwert und wenigstens einem mittels wenigstens eines zweiten Drucksensors (112, 312) ermittelten Messwert, wobei der erste Drucksensor (108, 310) und der wenigstens eine zweite Drucksensor (112, 312) an wenigstens einem Kompartiment angeordnet sind; und
   b) Abgleichen des in Schritt a) ermittelten Differenzwerts mit einer Zuordnungstabelle (400) und/oder Zuordnungsdaten, um einen Prozessparameter zu bestimmen, der auf einen in dem wenigstens einen Kompartiment angeordneten Stoff wirkt.

**Claims**

1. A measuring system (100, 600) for use in a dynamic system, in particular in a rotational system (302), the dynamic system comprising one or more compartments, and the measuring system (100, 600) being used or usable in the dynamic system during operation and being arranged and intended for determining a value of at least one process parameter acting on a substance arranged in at least one compartment of the dynamic system, the measuring system (100, 600) comprising at least one sensor unit (104) which can be arranged at least partially in at least one compartment of the dynamic system (302) and an evaluation unit (120, 607), the evaluation unit (120, 607) being configured to determine a current value of at least one process parameter acting on a substance arranged in the compartment on the basis of measured values detected by the at least one sensor unit (104), the at least one sensor unit (104) comprising at least one first pressure sensor (108, 310) and at least one second pressure sensor (112, 312), **characterized in that** the measuring system (100, 600) comprises several sensor units each having at least one first pressure sensor (108, 310) and at least one second pressure sensor (112, 312), the sensor units are to be arranged on and/or in a plurality of compartments of the dynamic system, in an operating state in which distances between respective first pressure sensors (108, 310) and second pressure sensors (112, 312) to be arranged on different compartments differ from one another, the evaluation unit is configured to use those pressure sensors (108, 112, 304, 312, 603) for determining a current value of the at least one process parameter which are arranged in a compartment which is assigned to a current operating state of the dynamic system (302) according to an assignment table (400) and/or assignment data.

2. The measuring system (100, 600) according to claim 1, **characterized in that** the at least one first pressure sensor (108, 310) and the at least one second pressure sensor (112, 312) form a differential pressure system (104).

3. The measuring system (100, 600) according to claim 1 or claim 2, **characterized in that** the respective pressure sensors (108, 112, 304, 312, 603) to be arranged on and/or in a respective compartment are arranged in a movable manner, in particular in such a way that a distance between the pressure sensors (108, 112, 304, 312, 603) arranged on and/or in the respective compartment changes, in particular decreases or increases, as a function of the rotational speed of a rotor of the dynamic system (302) designed as a rotational system.

4. The measuring system (100, 600) according to any of the preceding claims, **characterized in that** the measuring system (100, 600) comprises at least one position sensor for detecting an inclination of at least one compartment.

5. The measuring system (100, 600) according to claim 4, **characterized in that** the evaluation unit (120, 607) is configured to correct, during operation, measured values detected by the at least one sensor (108, 112, 304, 312, 603) using the inclination of the at least one compartment detected by means of the position sensor.

6. The measuring system (100, 600) according to claim 5, **characterized in that** the evaluation unit (120, 607) is configured to check a position of a respective compartment and/or of the rotational system (302) during operation on the basis of a comparison of measured values currently detected by the at least one position sensor with at least one reference value, and to output a warning by means of an output unit in the event that a deviation between the measured values currently detected by the at least one position sensor and the at least one reference value is greater than a predefined threshold value.

7. The measuring system (100, 600) according to any of the preceding claims, **characterized in that** the measuring system (100, 600) comprises at least one external sensor to be arranged outside a respective compartment for obtaining at least one operating parameter of the dynamic system (302), the evaluation unit (120, 607) being configured to correct respective measured values detected by the at least one sensor (108, 112, 304, 312, 603) to be arranged at least partially in the compartment using measured values detected by the external sensor.

8. The measuring system (100, 600) according to any of the preceding claims, **characterized in that** the measuring system (100, 600) comprises at least one temperature sensor (128), the evaluation unit (120, 607) being configured to correct respective measured values detected by means of the at least one sensor (108, 112, 304, 312, 603) using values detected by the at least one temperature sensor (128).

9. The measuring system (100, 600) according to any of the preceding claims, **characterized in that** the at least one sensor unit (104) forms a measuring unit (102, 601) surrounded by an enveloping structure.

10. The measuring system (100, 600) according to claim 9, **characterized in that** the enveloping structure encloses at least one reference substance, the reference substance in particular being exchangeable.

11. The measuring system (100, 600) according to claim 10, **characterized in that** the reference substance is selected from the following list of reference substances: gas, gas mixture, liquid mixture, liquid, glycerol.

12. The measuring system (100, 600) according to any of the preceding claims, **characterized in that** the measuring system (100, 600) comprises at least one communication module with a communication interface and is configured to transmit measured values detected by the at least one sensor (108, 112, 304, 312, 603) and/or currently detected values of the at least one process parameter to the evaluation unit (120, 607) by means of the at least one communication interface (118, 130).

13. The measuring system (100, 600) according to any of the preceding claims, **characterized in that** the measuring system (100, 600) comprises a memory (124) and a control unit (314, 605), the control unit (314, 605) being configured to temporarily store at least some of the values detected by the at least one sensor (101, 103, 501) in the memory (124) for transmission to the evaluation unit (120, 607).

14. The measuring system (100, 600) according to any of the preceding claims, **characterized in that** the at least one sensor unit (104) comprises at least one strain gauge (603) which is deformed as a function of an acceleration acting on the strain gauge (603), the evaluation unit (120, 607) being configured to determine the current value of the at least one process parameter on the basis of a deformation obtained by the strain gauge (603).

15. A dynamic system, in particular a rotational system (302), comprising a measuring system (100, 600) according to any of the preceding claims.

16. The dynamic system according to claim 15, **characterized in that** the dynamic system (302) comprises a control unit (304), the control unit (304) being configured to control a drive unit (306) for moving a rotor of the rotational system as a function of a current value, detected by means of the measuring system (100, 600), of at least one process parameter acting on a substance arranged in at least one compartment of the rotational system (302).

17. A method for determining a value of at least one process parameter acting on at least one substance arranged in at least one compartment of a dynamic system, in particular a rotational system (302), using a measuring system (100, 600) according to any of the preceding claims 1 to 14.

18. The method according to claim 17, **characterized in that** the method comprises the following steps:

(a) determining a differential value between at least one measured value detected by means of a first pressure sensor (108, 310) and at least one measured value detected by means of at least one second pressure sensor (112, 312), the first pressure sensor (108, 310) and the at least one second pressure sensor (112, 312) being arranged on at least one compartment; and
b) matching the differential value detected in step a) with an assignment table (400) and/or assignment data in order to determine a process parameter acting on a substance arranged in the at least one compartment.

**Revendications**

1. Système de mesure (100, 600) à utiliser dans un système dynamique, notamment dans un système de rotation (302), dans lequel le système dynamique comporte un ou plusieurs compartiments et dans lequel le système de mesure (100, 600) est utilisé ou peut être utilisé en fonctionnement dans le système dynamique et est conçu et défini pour déterminer une valeur d'au moins un paramètre de processus agissant sur une matière disposée dans au moins un compartiment du système dynamique, dans lequel le système de mesure (100, 600) comprend au moins une unité de capteurs (104) agençable au moins en partie dans au moins un compartiment du système dynamique (302) et une unité d'analyse (120, 607), dans lequel l'unité d'analyse (120, 607) est configurée pour déterminer, à l'aide de valeurs de mesure déterminées au travers de l'au moins une unité de capteurs (104), une valeur actuelle d'au moins un paramètre de processus agissant sur une matière disposée dans un compartiment, dans lequel l'au moins une unité de capteurs (104) comprend au moins un premier capteur de pression (108, 310) et au moins un deuxième capteur de pression (112, 312), **caractérisé en ce que** le système de mesure (100, 600) comprend plusieurs unités de capteurs avec respectivement au moins un premier capteur de pression (108, 310) et respectivement au moins un deuxième capteur de pression (112, 312), dans lequel les unités de capteurs sont agencées au niveau d'une pluralité de compartiments du système dynamique et/ou dans ceux-ci, dans lequel dans un état de fonctionnement dans lequel les distances entre les premier capteurs de pression (108, 310) et les deuxièmes capteurs de pression (112, 312) respectifs agencés au niveau de différents compartiments se distinguent l'une de l'autre, l'unité d'analyse est configurée pour utiliser ces capteurs de pression (108, 112, 304, 312, 603) pour déterminer une valeur actuelle de l'au moins un paramètre de processus, lesdits capteurs étant disposés dans un compartiment associé à un état actuel de fonctionnement du système dynamique (302), en fonction d'une table d'association (400) et/ou de données d'association.

2. Système de mesure (100, 600) selon la revendication 1, **caractérisé en ce que** l'au moins un premier capteur de pression (108, 310) et l'au moins un deuxième capteur de pression (112, 312) forment un système de pression différentielle (104).

3. Système de mesure (100, 600) selon la revendication 1 ou 2, **caractérisé en ce que** les capteurs de pression (108, 112, 304, 312, 603) respectifs agencés au niveau d'un compartiment respectif et/ou dans celui-ci sont disposés de façon mobile, notamment de telle sorte que le système dynamique (302) réalisé sous la forme du système de rotation en fonction de la vitesse de rotation d'un rotor modifie, notamment augmente ou réduise, une distance entre les capteurs de pression (108, 112, 304, 312, 603) disposés au niveau d'un compartiment respectif et/ou dans celui-ci.

4.  Système de mesure (100, 600) selon l'une quelconque des revendications précédentes, **caractérisé en ce que** le système de mesure (100, 600) comprend au moins un capteur de position pour déterminer l'inclinaison d'au moins un compartiment.

5.  Système de mesure (100, 600) selon la revendication 4, **caractérisé en ce que** l'unité d'analyse (120, 607) est configurée pour corriger les valeurs de mesure calculées en situation de fonctionnement de l'au moins un capteur (108, 112, 304, 312, 603) en utilisant l'inclinaison calculée à l'aide du capteur de position de l'au moins un compartiment.

6.  Système de mesure (100, 600) selon la revendication 5, **caractérisé en ce que** l'unité d'analyse (120, 607) est configurée pour contrôler en fonctionnement, à l'aide d'un rapprochement des valeurs de mesure actuellement calculées par l'au moins un capteur de position avec au moins une valeur de référence, une position d'un compartiment respectif et/ou du système de rotation (302) et dans le cas dans lequel un écart entre les valeurs de mesure actuellement calculées par l'au moins un capteur de position et l'au moins une valeur de référence est supérieure à une valeur seuil prédéfinie, pour émettre un avertissement à l'aide d'une unité d'émission.

7.  Système de mesure (100, 600) selon l'une quelconque des revendications précédentes, **caractérisé en ce que** le système de mesure (100, 600) comprend au moins un capteur externe à agencer à l'extérieur d'un compartiment respectif pour déterminer au moins un paramètre de fonctionnement du système dynamique (302), dans lequel l'unité d'analyse (120, 607) est configurée pour corriger les valeurs de mesure calculées par l'au moins un capteur (108, 112, 304, 312, 603) à agencer au moins en partie dans le compartiment en utilisant les valeurs de mesure calculées par le capteur externe.

8.  Système de mesure (100, 600) selon l'une quelconque des revendications précédentes, **caractérisé en ce que** le système de mesure (100, 600) comprend au moins un capteur de température (128), dans lequel l'unité d'analyse (120, 607) est configurée pour corriger les valeurs de mesure calculées à l'aide de l'au moins un capteur (108, 112, 304, 312, 603) en utilisant les valeurs calculées par l'au moins un capteur de température (128).

9.  Système de mesure (100, 600) selon l'une quelconque des revendications précédentes, **caractérisé en ce que** l'au moins une unité de capteurs (104) forme une unité de mesure (102, 601) entourée par une structure enveloppante.

10. Système de mesure (100, 600) selon la revendication 9, **caractérisé en ce que** la structure enveloppante inclut au moins une substance de référence, dans lequel notamment la substance de référence est amovible.

11. Système de mesure (100, 600) selon la revendication 10, **caractérisé en ce que** la substance de référence est sélectionnée à partir de la liste suivante de substances de référence : le gaz, le mélange gazeux, le mélange fluidique, le fluide et la glycérine.

12. Système de mesure (100, 600) selon l'une quelconque des revendications précédentes, **caractérisé en ce que** le système de mesure (100, 600) comprend au moins un module de communication avec une interface de communication et est conçu pour transmettre à l'unité d'analyse (120, 607) les valeurs de mesure déterminées par l'au moins un capteur (08, 112, 304, 312, 603) et/ou les valeurs actuellement calculées de l'au moins un paramètre de processus à l'aide de l'au moins une interface de communication (118, 130).

13. Système de mesure (100, 600) selon l'une quelconque des revendications précédentes, **caractérisé en ce que** le système de mesure (100, 600) comprend un accumulateur (124) et une unité de commande (314, 605), dans lequel l'unité de commande (314, 605) est conçue pour mettre en mémoire tampon au moins une partie des valeurs détectées par l'au moins un capteur (101, 103, 501) dans la mémoire (124) pour une transmission à l'unité d'analyse (120, 607).

14. Système de mesure (100, 600) selon l'une quelconque des revendications précédentes, **caractérisé en ce que** l'au moins une unité de capteurs (104) comporte au moins une bande de mesure de dilatation (603) qui se déforme en fonction d'une accélération agissant sur la bande de dilatation (603), dans lequel l'unité d'analyse (120, 607) est configurée pour déterminer à l'aide d'une déformation déterminée par la bande de dilatation (603) la valeur actuelle de l'au moins un paramètre de processus.

15. Système dynamique, notamment système de rotation (302), avec un système de mesure (100, 600) selon l'une quelconque des revendications précédentes.

16. Système dynamique selon la revendication 15, **caractérisé en ce que** le système dynamique (302) comprend une unité de commande (304), dans lequel l'unité de commande (304) est configurée pour commander un entraînement (306) en vue de déplacer un rotor du système de rotation en fonction d'une valeur actuelle, calculée à l'aide du système de mesure (100, 600), d'au moins un paramètre de processus agissant sur une matière disposée dans au moins un compartiment du système de rotation (302).

17. Procédé pour déterminer une valeur d'au moins un paramètre de processus agissant sur au moins une matière disposée dans au moins un compartiment d'un système dynamique, notamment d'un système de rotation (302), en utilisant un système de mesure (100, 600) selon l'une quelconque des revendications précédentes 1 à 14.

18. Procédé selon la revendication 17, **caractérisé en ce que** le procédé comprend les étapes suivantes :

   a) détermination d'une valeur différentielle entre au moins une valeur de mesure calculée à l'aide d'un premier capteur de pression (108, 310) et au moins une valeur de mesure calculée à l'aide d'au moins un deuxième capteur de pression (112, 312), dans lequel le premier capteur de pression (108, 310) et l'au moins un deuxième capteur de pression (112, 312) sont disposés au niveau de l'au moins un compartiment ; et
   b) recoupement de la valeur différentielle calculée à in l'étape a) avec la table d'association (400) et/ou les données d'association, pour déterminer un paramètre de processus agissant sur une matière disposée dans l'au moins un compartiment.

Fig. 1

EP 3 676 013 B1

```
┌─────────┐    ┌─────────┐    ┌─────────┐    ┌─────────┐
│   200   │───▶│   202   │───▶│   204   │───▶│   206   │
└─────────┘    └─────────┘    └─────────┘    └─────────┘
                                                   │
                                                   ▼
┌─────────┐    ┌─────────┐    ┌─────────┐    ┌─────────┐
│   214   │◀───│   212   │◀───│   210   │◀───│   208   │
└─────────┘    └─────────┘    └─────────┘    └─────────┘
```

Fig. 2

Fig. 3

EP 3 676 013 B1

Fig. 4

Fig. 5

Fig. 6

EP 3 676 013 B1

EP 3 676 013 B1

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19500133 A1
- DE 4420562 C2
- US 20100009833 A1
- US 6445286 B1
- US 4244513 A
- WO 2015172255 A1
- GB 2363745 A
- GB 130367 A